# EUROPÄISCHE PATENTANMELDUNG

(11) **EP 2 070 577 A1**
(43) Veröffentlichungstag der Anmeldung: **17.06.2009**
(21) Anmeldenummer: 07023869.6
(22) Anmeldetag: 10.12.2007
(51) Int. Cl.: B01D 46/52, B01D 46/24

(54) **Komprimierbares Filterelement mit umklappbarer Dichtlippe**

(71) Anmelder: Carl Freudenberg KG, 69469 Weinheim (DE); KNS-Enginering s.r.o., 77200 Olomouc (CZ)
(72) Erfinder: Stahl, Ulrich, 69514 Laudenbach (DE); Felber, Uwe, 69518 Absteinach (DE); Furch, Stanislav, 69125 Vranovice (CZ)

(57) **Zusammenfassung**

Ein Filterelement, umfassend ein erstes Bauteil (1), ein zweites Bauteil (2) und ein zwischen den Bauteilen (1, 2) angeordnetes Filtermedium (3), wobei die Bauteile (1, 2) durch das Filtermedium (3) beabstandet sind und wobei ein Bauteil (2) einen Durchgang (6) aufweist, ist im Hinblick auf die Aufgabe, ein Filterelement derart auszugestalten und weiterzubilden, dass dieses nach problemloser Montage eine ausreichend große Filterleistung aufweist, **dadurch gekennzeichnet, dass** an dem Durchgang (6) eine Dichtlippe (13) angeordnet ist, die von einer ersten Stellung in eine zweite Stellung umklappbar oder umstülpbar ist, um an einem Gegenstück (12) zur Anlage zu kommen.

## Beschreibung

### Technisches Gebiet

Die Erfindung betrifft ein Filterelement, umfassend ein erstes Bauteil, ein zweites Bauteil und ein zwischen den Bauteilen angeordnetes Filtermedium, wobei die Bauteile durch das Filtermedium beabstandet sind und wobei ein Bauteil einen Durchgang aufweist.

### Stand der Technik

Filterelemente der eingangs genannten Art sind aus dem Stand der Technik bereits bekannt. Diese Filterelemente finden insbesondere in der Motorluftfiltration in Kraftfahrzeugen, nämlich in deren Ansaugsystemen, Anwendung. Dabei werden Durchgänge, die in Bauteilen der Filterelemente ausgebildet sind, an luftführende Gegenstücke wie Rohre oder Leitungen angeflanscht.

Die bekannten Filterelemente werden derzeit häufig in Knautschzonen und damit crash-relevanten Bereichen von Kraftfahrzeugen angeordnet, um Verletzungen von Verkehrsteilnehmern vorzubeugen.

In diesen Bereichen ist der Bauraum und auch der Montageraum äußerst knapp bemessen, so dass die Filterelemente einen sehr kompakten Aufbau aufweisen müssen. Der kompakte Aufbau der Filterelemente darf jedoch nicht zu Leckagen in Anflanschbereichen führen. Daher besteht der Bedarf nach einem Dichtsystem, welches nach problemloser Montage in engen Bauräumen eine hohe Dichtheit gewährleistet.

### Darstellung der Erfindung

Der Erfindung liegt daher die Aufgabe zugrunde, ein Filterelement der eingangs genannten Art derart auszugestalten und weiterzubilden, dass dieses nach problemloser Montage eine ausreichend große Filterleistung aufweist.

Erfindungsgemäß wird die voran stehende Aufgabe mit den Merkmalen des Patentanspruchs 1 gelöst. Danach ist ein Filterelement dadurch gekennzeichnet, dass an dem Durchgang eine Dichtlippe angeordnet ist, die von einer ersten Stellung in eine zweite Stellung umklappbar oder umstülpbar ist, um an einem Gegenstück zur Anlage zu kommen.

Erfindungsgemäß ist erkannt worden, dass das Filterelement problemlos auf ein Gegenstück, beispielsweise ein Rohr, aufgesetzt und angepresst werden kann. Die Dichtlippe wird beim Einführen der Mündung des Durchgangs in das Gegenstück von einer ersten Stellung in eine zweite Stellung umgeklappt. Nach dem Umklappen liegt die Dichtlippe derart am Gegenstück an, dass sie bei Ansaugen von Luft gegen die Innenwandung des Gegenstücks gepresst wird. In der ersten Stellung steht die Dichtlippe unter einer Vorspannung. Gegen diese Vorspannung kann die Dichtlippe erfindungsgemäß umgeklappt werden und liegt daher nach problemloser Montage besonders fest an der Innenwandung des Gegenstücks an. Folglich ist die eingangs genannte Aufgabe gelöst.

Das Filtermedium könnte aus einem Vliesstoff gefertigt und derart gefaltet sein, dass ein Abstand zwischen den Bauteilen bei deren Kraftbeaufschlagung zumindest bereichsweise reversibel verringerbar ist. Die Verwendung eines derart gefalteten Vliesstoffes erlaubt, ein reversibel deformierbares Filterelement herzustellen, welches eine ausreichend große Filterfläche bietet. Ganz konkret kann die Filterleistung eines Papiers auch von einem Vliesstoff gewährleistet werden, der eine bestimmte Faltung bei geringerer Faltendichte aufweist. Die Faltenrücken zweier benachbarter Falten können bei einem Vliesstoff weiter beabstandet sein als die eines Filtermediums aus Papier. Die Faltendichte kann durch Verwendung eines Vliesstoffs erheblich verringert werden. Die weitere Beabstandung der Falten erlaubt ein Einknicken der Falten und damit eine problemlose Verringerung des Abstands zwischen den Bauteilen. Des Weiteren zeigt ein Vliesstoff eine besondere Elastizität, die eine reversible Deformierung des Filterelements ermöglicht. Dies gewährleistet eine bedingte Gebrauchstauglichkeit des Filterelements nach Deformierung durch einen Unfall, nämlich eine sogenannte Notlaufeigenschaft.

Des Weiteren erlaubt die Verwendung eines Vliesstoffs überraschenderweise die Beabstandung der Bauteile allein durch das Filtermedium, da der Vliesstoff aufgrund seiner Faserstruktur eine ausreichend hohe Eigensteifigkeit zeigt. Ein Vliesstoff weist auch nach Durchnässung und anschließender Trocknung im Gegensatz zu Papier eine sehr hohe Reißfestigkeit und damit hohe Stabilität auf. Schließlich zeigt ein Vliesstoff aus synthetischem Material eine hohe Temperaturstabilität und eignet sich daher für den Einsatz in Motorräumen von Kraftfahrzeugen. Weitere Stabilisierungsmittel, die das Filtermedium bei der Beabstandung der Bauteile unterstützen, sind nicht zwingend notwendig. Hierdurch ist eine kostengünstige Fertigung des Filterelements realisierbar. Weitere Stabilisierungsmittel können aber vorgesehen werden, um die Deformierbarkeit des Filterelments definiert einzustellen.

Der Abstand zwischen den Bauteilen könnte um mindestens 20%, vorzugsweise um mindestens 75% verringerbar sein. Diese konkrete Ausgestaltung stellt sicher, dass ein Fußgänger, der mit einem Körperteil gegen die Karosserie eines Kraftfahrzeugs stößt, vor Verletzungen weitgehend geschont wird. Das Verletzungsrisiko wird hierdurch erheblich verringert.

Vor diesem Hintergrund ist denkbar, dass das Filtermedium eine Höhe h aufweist, die um mindestens 20%, vorzugsweise um mindestens 75% verringerbar ist. Bei dieser konkreten Ausgestaltung können die Bauteile aus einem harten Material sein und müssen nahezu nichts zur Komprimierbarkeit des gesamten Filterelements beitragen. Insoweit ist ein besonders kostengünstiger Fertigungsprozess realisierbar, da die Bauteile aus herkömmlichen Kunststoffen gefertigt werden können. Insbesondere ist aber auch denkbar, dass die Bauteile aus einem verfestigten Vliesstoff gefertigt sind. Hierdurch ist ein materialeinheitlicher Aufbau des Filterelements realisierbar.

Die Komprimierbarkeit des Filterelements, das heisst dessen Kraft-Weg-Verhalten, könnte durch Modifizierung des verwendeten Vliesstoffs eingestellt werden. Diese Modifizierung könnte durch Verwendung von Fasern unterschiedlicher Biegesteifigkeit realisiert werden. Dabei könnten synthetische Fasern mit natürlichen Fasern in einem bestimmten Mischungsverhältnis miteinander verbunden werden. Die Steifigkeit des Vliesstoffes könnte auch durch unterschiedliche Fertigungsmethoden eingestellt werden. Beispielsweise könnte durch geeignete Wahl der Parameter einer Wasserstrahlvernadelung die Steifigkeit des Vliesstoffs eingestellt werden.

Der Vliesstoff könnte synthetische Fasern umfassen oder vollständig aus synthetischen Fasern bestehen. Hierbei ist denkbar, dass die synthetischen Fasern aus Polypropylen, Polyester oder Polybutadienterephtalat gefertigt sind. Die Kraftfahrzeugindustrie verlangt von einem gebrauchstauglichen Filterelement in Ansaugsystemen gemäß DIN ISO 5011 eine ganz konkrete Filterleistung, nämlich eine Abscheideleistung von mehr als 98 %. Nach dieser Norm zeigt ein Filterelement nur dann eine ausreichende Filterleistung, wenn 98 % der Teststäube in der zu filternden Luft im Filtermedium abgeschieden werden. Überraschenderweise hat sich gezeigt, dass ein Vliesstoff, der synthetische Fasern umfasst, diesen Anforderungen bei problemloser Deformierbarkeit genügt. Die problemlose Deformierbarkeit wird wesentlich durch einen relativ weiten Faltenabstand realisiert.

Das Filtermedium könnte aus einem thermoplastischen Vliesstoff gefertigt sein. Ein thermoplastischer Vliesstoff zeigt überraschenderweise eine hohe Komprimierbarkeit im gefalteten Zustand. Versuche haben ergeben, dass ein gefalteter Vliesstoff einer Höhe von 48 mm, der in Richtung der Faltenrücken mit Kraft beaufschlagt wird, bei 100 N um 28,32 mm komprimierbar ist. Bei 0, 5 N, 10 N, 20 N und 50 N ist der untersuchte Vliesstoff um 0, 0,4 mm, 2,76 mm, 9,54 mm bzw. 17,23 mm in seiner Höhe verringerbar. Der Kraftvektor ist bei dieser Messung parallel zu den Faltenrücken orientiert. Bei dem verwendeten thermoplastischen Vliesstoff handelt es sich um einen Vliesstoff, der aus Polyesterfasern gefertigt ist. Der Vliesstoff weist kein Bindemittel auf, die Fasern sind vielmehr durch thermische Verfestigungsverfahren miteinander verschweisst. Der Vliesstoff weist ein Flächengewicht von 230 g/m² auf. Die Falten des Vliesstoffs haben eine Höhe von 48 mm und eine Breite von 40 mm. Die Länge des Vliesstoffs beträgt 100 mm. Die Auflagefläche bei der zuvor beschriebenen Kraftmessung beträgt 100 mal 48 mm.

Es ist auch denkbar, Vliesstoffe einzusetzen, die ein Flächengewicht von 100 bis 500 g/m² aufweisen. Vliesstoffe dieser Flächengewichte weisen eine ausreichend hohe Eigensteifigkeit auf, um zwei Bauteile voneinander zu beabstanden und erbringen zugleich eine ausreichend hohe Filterleistung.

Das Filtermedium könnte Falten aufweisen, deren Faltenstirnseiten den Bauteilen zugewandt sind. Diese konkrete Ausgestaltung erlaubt eine problemlose Verbindung des Filtermediums mit den Bauteilen. Vor diesem Hintergrund ist beispielsweise denkbar, dass den Bauteilen ein Klebstoff zugeordnet ist, in welchen die Faltenstirnseiten eintauchen und somit einen Verbund mit den Bauteilen eingehen.

Die Faltenrücken zweier benachbarter Falten könnten einen Abstand von 0,5 bis 3 cm aufweisen. Die Auswahl des Abstands aus diesem Bereich hat sich als besonders vorteilhaft erwiesen, um einerseits eine problemlose Deformierbarkeit des Filtermediums und andererseits eine noch ausreichend große effektive Filterfläche zur Verfügung zu stellen, die für die Motorluftfiltration notwendig ist. Filtermedien aus Papier können bei einem solchen Faltenrückenabstand keine ausreichende Filterleistung, d.h. keine von der KFZ-Industrie geforderte Abscheiderate, realisieren und sind daher für Ansaugsysteme ungeeignet.

Ganz konkret ist auch denkbar, dass die Falten mit Sollbiegestellen versehen sind, welche ein definiertes Einknicken des Filtermediums bei Kraftbeaufschlagung bewirken. Insbesondere ist denkbar, dass den Falten Konturen aufgeprägt sind, die ein bestimmtes Einknickverhalten der Falten bei Kraftbeaufschlagung der Bauteile vorgeben oder einleiten. Die Sollbiegestellen könnten durch Ultraschallschweißprozesse auf das Filtermedium aufgeprägt werden. Ultraschallschweißprozesse lassen sich besonders schnell und kostengünstig durchführen und ermöglichen eine problemlose bereichsweise Verjüngung eines Filtermediums. Denkbar ist auch, eine Prägung des Filtermediums allein durch Kraftbaufschlagung zu realisieren.

Um eine problemlose Deformierbarkeit des Filterelements zu bewirken, könnten die Faltenrücken einen von 90° verschiedenen Winkel mit den Grundflächen der Bauteile einschließen. Die so geneigten Faltenrücken lassen sich dann problemlos und besonders leicht derart deformieren, dass sich die Bauteile einander annähern.

Denkbar ist auch, dass zwei oder mehr Falten in definierten Abständen derart miteinander verbunden sind, dass die Faltenwandungen oder Faltenflanken aneinanderliegen. Es könnten Bereiche von zwei oder mehreren verbundenen Falten durch eine definierte Anzahl unverbundener Falten beabstandet sein. So könnten ganz konket, jedoch nicht hierauf einschränkend beispielsweise alle fünf Falten zwei Falten miteinander verbunden sein. Hierdurch kann die Deformierbarkeit des Filterelements eingestellt werden. Die Faltenwandungen könnten miteinander verklebt, verschweisst oder formschlüssig miteinander verbunden sein. Eine Verklebung stellt einen sehr festen Verbund her. Eine Verschweissung lässt sich unter Aussteifung der Falten realisieren. Der formschlüssige Verbund lässt ein Ablösen der Falten voneinander unter bestimmten Umständen zu.

Zumindest ein Bauteil könnte aus einem Material gefertigt sein, dass härter oder biegesteifer als das Filtermedium ist. Diese konkrete Ausgestaltung erlaubt eine Fertigung eines stabilen Filterelements, welches das Filtermedium gegen Schlag- und Stoßeinwirkungen schützt. Des Weiteren wird das Filtermedium vor Verschmutzungen geschützt. Vor diesem Hintergrund ist denkbar, dass zumindest ein Bauteil aus einem verfestigten Vliesstoff gefertigt ist.

Um eine kostengünstige Fertigung zu realisieren könnte zumindest ein Bauteil spritzgusstechnisch gefertigt sein. Hierbei ist denkbar, dass die Bauteile aus Polypropylen oder Polyamid gefertigt sind.

Zumindest ein Bauteil könnte geschäumt gefertigt sein. Ein solches Bauteil geht einen sehr guten Verbund mit dem Filtermedium ein, da das geschäumte Material die Falten des Filtermediums umfliessen kann. Als geschäumtes Material könnte Polyurethan verwendet werden. Dieses Material ist problemlos verarbeitbar.

Denkbar ist auch, die Bauteile aus Metallen zu fertigen. Metalle geben dem Filterelement eine hohe Stabilität und Temperaturfestigkeit.

Die umklappbare Dichtlippe könnte eine Ausbuchtung aufweisen. Die Ausbuchtung verhindert den Aufbau von inneren Spannungen, wenn die Dichtlippe am Gegenstück anliegt und erhöht damit die Lebensdauer der Dichtlippe.

Die Dichtlippe könnte einen Wulst aufweisen. Der Wulst erhöht die Anlage- bzw. Kontaktfläche des Materials, aus dem die Dichtlippe gefertigt ist, an der Mündung des Durchgangs. Hierfür könnte an der Mündung des Durchgangs eine Nut oder eine Aussparung vorgesehen sein, in die der Wulst hineinragt.

Vor diesem Hintergrund ist denkbar, dass die Dichtlippe und der Durchgang als Zwei-Komponenten-Spritzgußteil ausgestaltet sind. Hierdurch ist eine kostengünstige und rasche Fertigung eines Bauteils mit einem zuverlässigen Dichtsystem möglich, da die Dichtlippe und das Bauteil in einem Spritzgießvorgang gemeinsam und miteinander unverlierbar verbunden herstellbar sind.

Zumindest einem Bauteil könnten Rastmittel zugeordnet sein, die mit dem Bauteil einstückig ausgebildet sind und in komplementär dazu ausgebildete Rastmittelaufnahmen eines Luftfiltergehäuses einrastbar sind. Diese Rastmittel könnten vom Rand des Bauteils zungenförmig abragen. Hierbei ist konkret denkbar, dass die zungenförmigen Rastmittel rundum laufend an einem Bauteil angeordnet sind. Hierdurch ist das Filterelement in ein Luftfiltergehäuse eines Kraftfahrzeugs ohne Einsatz weiterer Befestigungsmittel einrastbar.

Zumindest einem Bauteil könnten Sollbruchmittel zugeordnet sein, welche die Bauteile in Ergänzung zu dem Filtermedium voneinander beabstanden. Hierdurch ist die Verwendung eines sehr weichen und sehr leicht deformierbaren Filtermediums möglich, da die Beabstandung der Bauteile überwiegend von den Sollbruchmitteln übernommen wird. Die Sollbruchmittel könnten derart ausgestaltet sein, dass sie bei einer ganz konkreten Kraftbeaufschlagung der Bauteile brechen und eine Deformierbarkeit des Filterelements sicherstellen.

Denkbar ist auch, dass zwischen den Bauteilen elastisch deformierbare Stabilisierungselemente angeordnet sind. Hierdurch ist ein einfedern und ausfedern der Bauteile möglich. Ganz konkret könnten die Stabilisierungselemente als Spiralfedern oder Blattfedern ausgebildet sein, da diese mechanisch sehr stabil und im Hinblick auf ihre Federkonstanten problemlos einstellbar sind.

Dem Filtermedium könnte ein Vorfilter zugeordnet sein. Dieser bewirkt die Vorabscheidung von Partikeln, bevor diese in das Filtermedium eindringen und dieses zusetzen können. Der Vorfilter ist dabei als flächige Lage ausgebildet, die am vorzugsweise gefalteten Filtermedium anliegt.

Vor diesem Hintergrund ist ganz konkret denkbar, dass die Bauteile das Filtermedium sandwichartig einschließen, wobei die Bauteile, der Vorfilter und das Filtermedium die Wandungen eines Volumens bilden. In dieses Volumen kann das zu filternde Medium zunächst durch den Vorfilter und dann durch das Filtermedium einströmen und gefiltert durch den Durchgang austreten. Selbstverständlich ist ebenfalls eine Umkehrung der Strömungsrichtung denkbar, nämlich ein Eintritt des ungefilterten Mediums durch den Durchgang und ein Austritt durch das Filtermedium bzw. durch den Vorfilter.

Das Filterelement könnte als Luftfilter eines Kraftfahrzeugs ausgestaltet sein. Die problemlose Deformierbarkeit des erfindungsgemäßen Filterelements eignet es hervorragend für die Anordnung in einem Kraftfahrzeug direkt unter der Motorhaube, wo üblicherweise Luftfilter positioniert werden. Vor diesem Hintergrund ist denkbar, dass ein Bauteil als Abdeckung des Volumens im Luftfiltergehäuse fungiert, in welches das Filterelement eingesetzt wird.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche, andererseits auf die nachfolgende Erläuterung bevorzugter Ausführungsbeispiele des erfindungsgemäßen Filterelements anhand der Zeichnung zu verweisen.

In Verbindung mit der Erläuterung der bevorzugten Ausführungsbeispiele anhand der Zeichnung werden auch im Allgemeinen bevorzugte Ausgestaltungen und Weiterbildungen der Lehre erläutert.

### Kurzbeschreibung der Zeichnung

In der Zeichnung zeigen
- Fig. 1: in einer Schnittansicht ein Filterelement, welches aus zwei Bauteilen und einem Filtermedium besteht,
- Fig. 2: eine Draufsicht auf ein Bauteil eines Filterelements gemäß Fig. 1,
- Fig. 3: einen Durchgangsbereich in einem Bauteil des Filterelements gemäß Stand der Technik,
- Fig. 4: ein Filterelement mit einem als Spiralfeder ausgebildeten Stabilisierungselement, und
- Fig. 5: den Durchgang in einem Bauteil des Filterelements gemäß Fig. 1, dem eine umklappbare oder umstülpbare Dichtlippe zugeordnet ist.

### Ausführung der Erfindung

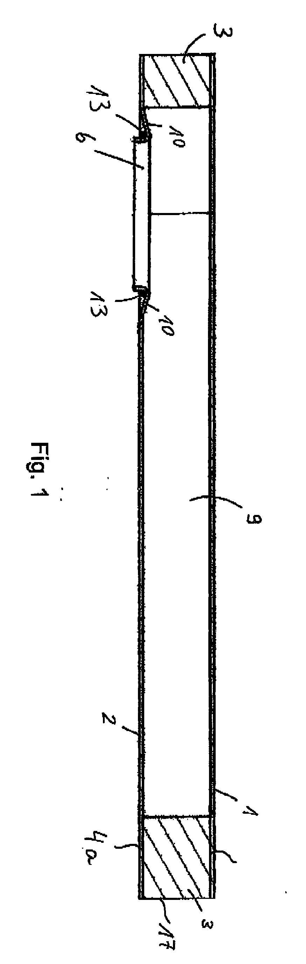

Fig. 1 zeigt ein erstes Bauteil 1, ein zweites Bauteil 2 und ein zwischen den Bauteilen 1, 2 angeordnetes, gefaltetes Filtermedium 3. Die Bauteile 1, 2 sind durch das Filtermedium 3 beabstandet. Das Filtermedium 3 ist aus einem Vliesstoff gefertigt und derart gefaltet, dass ein Abstand zwischen den Bauteilen 1, 2 bei deren Kraftbeaufschlagung zumindest bereichsweise reversibel verringerbar ist.

Das Filtermedium 3 fungiert aufgrund seiner Eigensteifigkeit als Stützmaterial und kann ohne weitere Stabilisierungsmittel die beiden Bauteile 1, 2 als einzelnes Teil beabstanden. Das Filtermedium 3 begrenzt mit den Bauteilen 1, 2 ein Volumen 9. Im Bauteil 2 ist ein Durchgang 6 ausgebildet, an den Leitungen zum Volumen 9 anflanschbar sind. Dem Durchgang 6 ist ein rampenförmiger Bereich 10 und eine Dichtlippe 13 zugeordnet.

Das zu filternde Medium tritt über das Filtermedium 3 in das Volumen 9 ein und wird dabei gefiltert. Das gefilterte Medium tritt über den Durchgang 6 aus dem Volumen 9 wieder aus.

Ein zu filterndes Medium kann auch durch den Durchgang 6 in das Volumen 9 des Filterelements eindringen und über das Filtermedium 3 austreten. Das Volumen 9 wird durch die Bauteile 1, 2 und das Filtermedium 3 begrenzt.

Der Abstand zwischen den beiden Bauteilen 1, 2 ist um mindestens 20%, vorzugsweise um mindestens 75% verringerbar. Das Filtermedium 3 ist aus einem thermoplastischen Vliesstoff gefertigt. Dem Filtermedium 3 ist ein Vorfilter 17 zugeordnet.

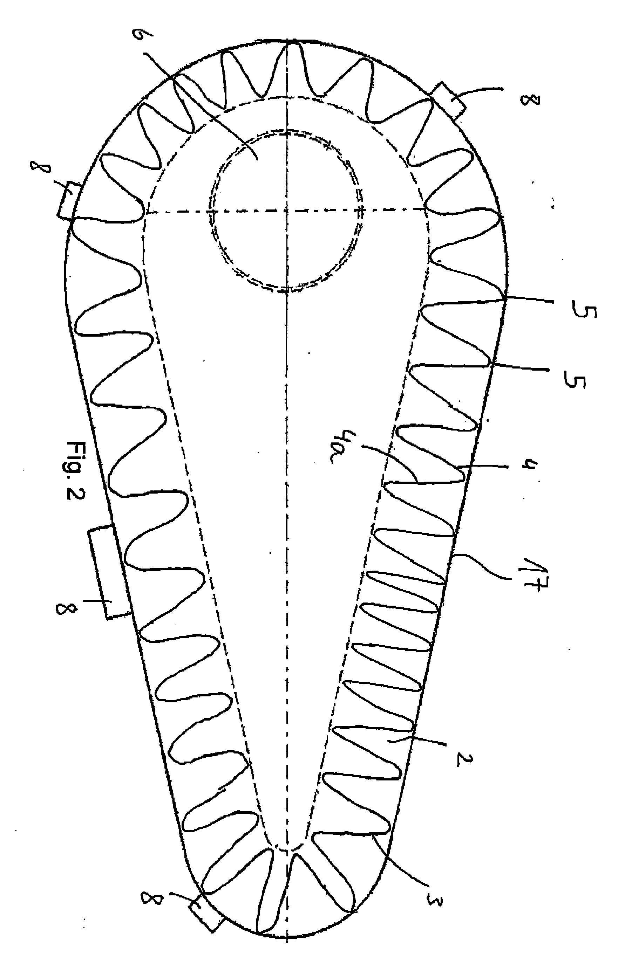

Fig. 2 zeigt eine Draufsicht auf ein Bauteil 2, dem ein Filtermedium 3 aus einem thermoplastischen Vliesstoff zugeordnet ist. Das Filtermedium 3 weist Falten 4 auf, deren Faltenstirnseiten 4a den Bauteilen 1, 2 zugewandt sind. Dabei ist eine Faltenstirnseite 4a dem Bauteil 2 derart zugewandt, dass die Faltenstirnseiten 4a in einem Klebstoff eingetaucht sind. Hierdurch wird ein Verbund zwischen dem Bauteil 2 und dem Filtermedium 3 hergestellt.

Die Faltenrücken 5 zweier benachbarter Falten weisen einen Abstand von 0,5 bis 3 cm auf. Dem Filtermedium 3 in Fig. 2 ist ein Vorfilter 17 zugeordnet, der als flächige Lage ausgebildet ist. Der Vorfilter 17 ist ebenfalls aus einem thermoplastischen Vliesstoff gefertigt und dient der Vorabscheidung von Partikeln.

Die Bauteile 1, 2 sind aus einem Material gefertigt, das härter als das Filtermedium 3 ist. Die Bauteile 1, 2 sind spritzgusstechnisch gefertigt und bestehen aus Polypropylen.

Aus Fig. 2 ist ersichtlich, dass das Filterelement einen keilförmigen bzw. tropfenförmigen Aufbau zeigt. Das gefaltete Filtermedium 3 aus einem thermoplastischen Vliesstoff wird sandwichartig zwischen den Bauteilen 2 und dem nicht gezeigten Bauteil 1 aufgenommen. Bauteil 2 weist einen Durchgang 6 auf.

Dem Bauteil 2 sind Rastmittel 8 zugeordnet, die mit dem Bauteil 2 einstückig ausgebildet sind und in komplementär dazu ausgebildete Rastmittelaufnahmen eines Luftfiltergehäuses einrastbar sind. Die Rastmittel 8 ragen vom Rand des Bauteils 2 zungenförmig ab. Die zungenförmigen Rastmittel 8 sind rundum am Bauteil 2 angeordnet. Hierdurch ist das Filterelement in ein Luftfiltergehäuse eines Kraftfahrzeugs ohne Einsatz weiterer Befestigungsmittel einrastbar.

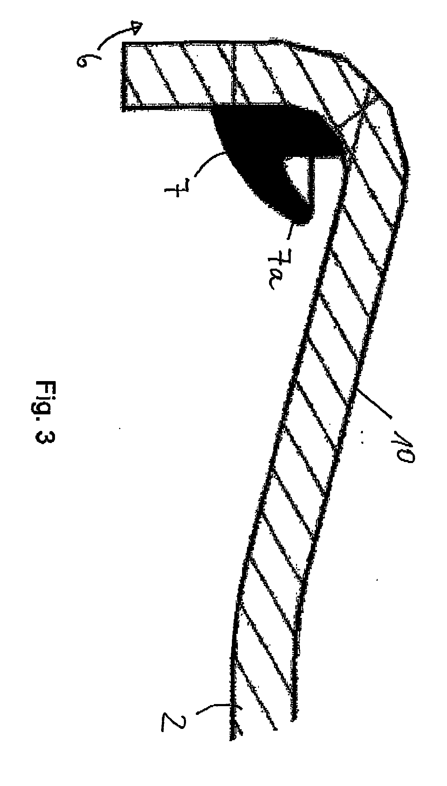

Fig. 3 zeigt einen Ausschnitt aus einem Bauteil 2 gemäß Stand der Technik, welches mit dem Bauteil 1 durch ein Filtermedium 3 verbunden ist. Das Bauteil 2 gemäß Stand der Technik weist einen Durchgang 6 auf, dem ein Dichtmittel 7 zugeordnet ist. Das Dichtmittel 7 ist als Dichtlippe aus einem thermoplastischen Ethylen ausgestaltet. Das Dichtmittel 7 weist einen Vorsprung 7a auf, der als Rastmittel fungiert, in das ein Gegenstück 12 einrasten kann. Das Gegenstück 12 kann als Schlauch, Rohr oder Leitung für ein zu filterndes oder gefiltertes Medium ausgestaltet sein.

Dem Durchgang 6 ist ein rampenförmiger Bereich 10 zugeordnet, der ein besonders günstiges Strömungsverhalten des zu filternden Mediums in dem relativ engen Volumen 9 bewirkt.

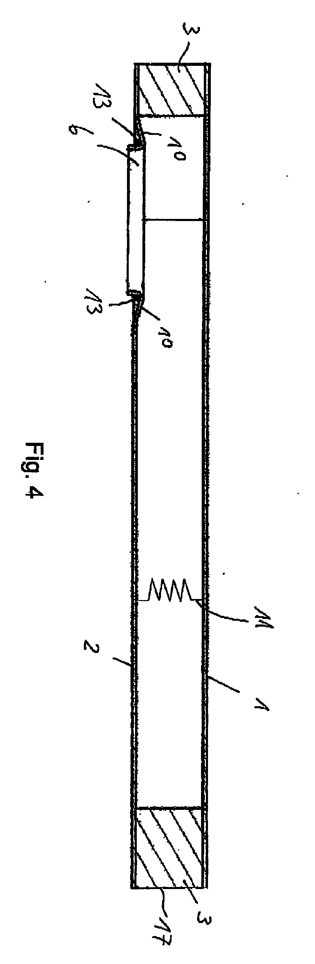

Fig. 4 zeigt ein erstes Bauteil 1, ein zweites Bauteil 2 und ein zwischen den Bauteilen 1, 2 angeordnetes, gefaltetes Filtermedium 3. Die Bauteile 1, 2 sind durch das Filtermedium 3 beabstandet. Das Filtermedium 3 ist aus einem Vliesstoff gefertigt und derart gefaltet, dass ein Abstand zwischen den Bauteilen 1, 2 bei deren Kraftbeaufschlagung zumindest bereichsweise reversibel verringerbar ist.

Das Filtermedium 3 fungiert aufgrund seiner Eigensteifigkeit als Stützmaterial und beabstandet zusammen mit einem Stabilisierungselement 11 die beiden Bauteile 1, 2. Das Stabilisierungselement 11 ist als Spiralfeder ausgebildet und bewirkt ein Einfedern und Ausfedern der Bauteile 1, 2. Insbesondere vermag die Spiralfeder 11 zwei einander angenäherte Bauteile 1, 2 nach Deformierung des Filtermediums 3 erneut zu beabstanden und in deren ursprüngliche Lage zu verbringen.

Das Filtermedium 3 begrenzt mit den Bauteilen 1, 2 ein Volumen 9. Im Bauteil 2 ist ein Durchgang 6 ausgebildet, an den Leitungen zum Volumen 9 anflanschbar sind. Dem Durchgang 6 ist ein rampenförmiger Bereich 10 und eine Dichtlippe 13 zugeordnet. Dem Filtermedium 3 ist ein Vorfilter 17 zugeordnet.

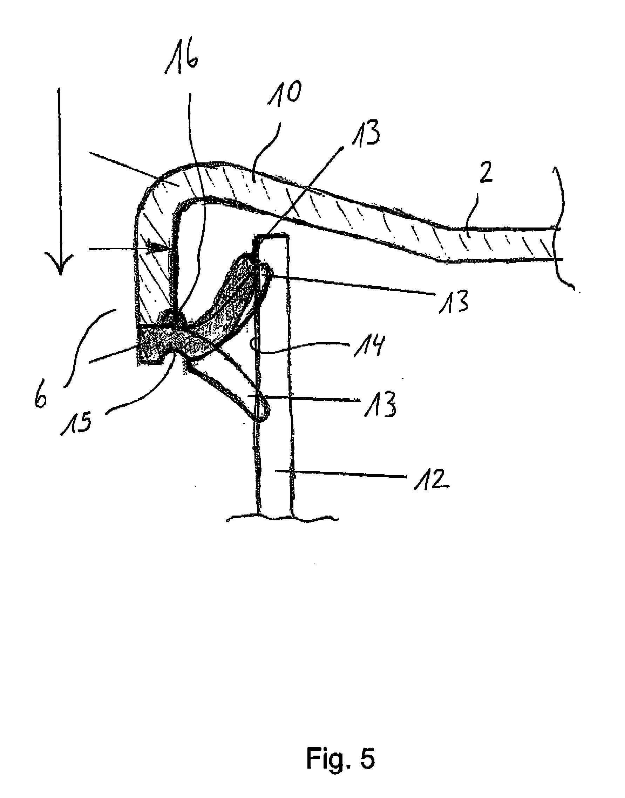

Fig. 5 zeigt einen Ausschnitt des Bauteils 2 gemäß Fig. 1 und Fig. 4. Das Bauteil 2 ist mit dem Bauteil 1 durch ein Filtermedium 3 verbunden. Das Bauteil 2 weist einen Durchgang 6 auf, dem eine umklappbare oder umstülpbare Dichtlippe 13 zugeordnet ist.

Die Dichtlippe 13 kommt an einem Gegenstück 12 zur Anlage. Die Dichtlippe 13 wird beim Einführen Durchgangs 6 in das Gegenstück 12 von einer ersten Stellung in eine zweite Stellung umgeklappt. Nach Umklappen liegt die Dichtlippe 13 derart am Gegenstück 12 an, dass sie bei Ansaugen von Luft in Richtung des Pfeils gegen die Innenwandung 14 des Gegenstücks gepresst wird. Die Stellungen der Dichtlippe 13 vor und während des Umklappens sind in Fig. 5 durch nicht ausgefüllte Darstellungen der Dichtlippe 13 gekennzeichnet. Die zweite Stellung, die nach Umklappen eingenommen wird, ist durch eine ausgefüllte Darstellung der Dichtlippe 13 gekennzeichnet.

In der ersten Stellung, nämlich in der sogenannten angespritzten Stellung, steht die Dichtlippe 13 unter Vorspannung. Gegen diese Vorspannung kann die Dichtlippe 13 umgeklappt werden und liegt daher besonders fest an der Innenwandung 14 des Gegenstücks 12 an. Das Gegenstück 12 kann als Schlauch, Rohr oder Leitung für ein zu filterndes oder gefiltertes Medium ausgestaltet sein.

Die Dichtlippe 13 weist eine Ausbuchtung 15 auf. Die Ausbuchtung 15 dient dem Abbau von Spannungen innerhalb der Dichtlippe 13 und erhöht deren Lebensdauer. Des Weiteren liegt die Dichtlippe 13 mit einem Wulst 16 am Bauteil 2 bzw. an der Mündung des Durchgangs 6 an. Der Wulst 16 erhöht die Anlagefläche der Dichtlippe 13 am Bauteil 2.

Die Dichtlippe 13 ist aus thermoplastischem Etyhlen V einer Shore-A-Härte von 45 gefertigt. Die Dichtlippe 13 ist an das Bauteil 2 bzw. an die Mündung des Durchgangs 6 angespritzt. Das Bauteil 2 ist aus Polypropylen TV 20 oder Polypropylen TV 40 gefertigt. Das Bauteil 2 und die Dichtlippe 13 sind als Zwei-Komponenten-Spritzgußteil ausgebildet. Ein solches 2K-Spritzgußteil kann kostengünstig in einem Spritzgießvorgang erzeugt werden.

Der Außendurchmesser des Durchgangs 6 beträgt 104,5 mm, der Innendurchmesser des Gegenstücks 12 beträgt 114 mm.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

Abschließend sei ganz besonders hervorgehoben, dass die zuvor rein willkürlich gewählten Ausführungsbeispiele lediglich zur Erörterung der erfindungsgemäßen Lehre dienen, diese jedoch nicht auf diese Ausführungsbeispiele einschränken.

## Patentansprüche

1. Filterelement, umfassend ein erstes Bauteil (1), ein zweites Bauteil (2) und ein zwischen den Bauteilen (1, 2) angeordnetes Filtermedium (3), wobei die Bauteile (1, 2) durch das Filtermedium (3) beabstandet sind und wobei ein Bauteil (2) einen Durchgang (6) aufweist, **dadurch gekennzeichnet, dass** an dem Durchgang (6) eine Dichtlippe (13) angeordnet ist, die von einer ersten Stellung in eine zweite Stellung umklappbar oder umstülpbar ist, um an einem Gegenstück (12) zur Anlage zu kommen.

2. Filterelement nach Anspruch 1, **dadurch gekennzeichnet, dass** das Filtermedium (3) aus einem Vliesstoff gefertigt und derart gefaltet ist, dass ein Abstand zwischen den Bauteilen (1, 2) bei deren Kraftbeaufschlagung zumindest bereichsweise reversibel verringerbar ist.

3. Filterelement nach Anspruch 2, **dadurch gekennzeichnet, dass** der Abstand um mindestens 20%, vorzugsweise um mindestens 75 % verringerbar ist.

4. Filterelement nach Anspruch 2 oder 3, **dadurch gekennzeichnet, dass** das Filtermedium (3) eine Höhe h aufweist, die um mindestens 20%, vorzugsweise um mindestens 75 % verringerbar ist.

5. Filterelement nach einem der Ansprüche 1 bis 4, **dadurch gekennzeichnet, dass** das Filtermedium (3) aus einem Vliesstoff gefertigt ist, der synthetische Fasern oder verschiedene Fasern unterschiedlicher Biegesteifigkeit umfasst.

6. Filterelement nach einem der Ansprüche 1 bis 5, **dadurch gekennzeichnet, dass** das Filtermedium (3) aus einem thermoplastischen Vliesstoff gefertigt ist.

7. Filterelement nach einem der Ansprüche 1 bis 6, **dadurch gekennzeichnet, dass** das Filtermedium (3) Falten (4) aufweist, deren Faltenstirnseiten (4a) den Bauteilen (1, 2) zugewandt sind.

8. Filterelement nach einem der Ansprüche 1 bis 7, **dadurch gekennzeichnet, dass** die Faltenrücken (5) zweier benachbarter Falten (4) einen Abstand von 0,5 bis 3 cm aufweisen.

9. Filterelement nach einem der Ansprüche 1 bis 8, **dadurch gekennzeichnet, dass** die Falten mit Sollbiegestellen versehen sind,

10. Filterelement nach einem der Ansprüche 1 bis 9, **dadurch gekennzeichnet, dass** zwei oder mehr Falten in definierten Abständen derart miteinander verbunden sind, dass die Faltenwandungen oder Faltenflanken zumindest teilweise aneinanderliegen.

11. Filterelement nach einem der Ansprüche 1 bis 10, **dadurch gekennzeichnet, dass** zumindest ein Bauteil (1, 2) aus einem Material gefertigt ist, das härter als das Filtermedium (3) ist.

12. Filterelement nach Anspruch 11, **dadurch gekennzeichnet, dass** zumindest ein Bauteil (1, 2) spritzgusstechnisch gefertigt ist.

13. Filterelement nach einem der Ansprüche 1 bis 12, **dadurch gekennzeichnet, dass** die Dichtlippe (13) eine Ausbuchtung (15) aufweist.

14. Filterelement nach einem der Ansprüche 1 bis 13, **dadurch gekennzeichnet, dass** die Dichtlippe (13) einen Wulst (16) aufweist.

15. Filterelement nach einem der Ansprüche 1 bis 14, **dadurch gekennzeichnet, dass** die Dichtlippe (13) und der Durchgang (6) als Zwei-Komponenten-Spritzgußteil ausgestaltet sind.

16. Filterelement nach einem der Ansprüche 1 bis 15, **dadurch gekennzeichnet, dass** zumindest einem Bauteil (1, 2) Rastmittel (8) zugeordnet sind, die mit dem Bauteil (1, 2) einstückig ausgebildet sind.

17. Filterelement nach einem der Ansprüche 1 bis 16, **dadurch gekennzeichnet, dass** zumindest einem Bauteil (1, 2) Sollbruchmittel zugeordnet sind.

18. Filterelement nach einem der Ansprüche 1 bis 17, **dadurch gekennzeichnet, dass** zumindest einem Bauteil (1, 2) elastische Stabilisierungselemente (11) zugeordnet sind.

19. Filterelement nach einem der Ansprüche 1 bis 18, **dadurch gekennzeichnet, dass** dem Filtermedium 3 ein Vorfilter 17 zugeordnet ist.

20. Filterelement nach einem der Ansprüche 1 bis 19, **gekennzeichnet durch** eine Ausgestaltung als Luftfilter eines Kraftfahrzeugs.
